# EUROPEAN PATENT SPECIFICATION

(11) **EP 3 984 692 B1**
(45) Date of publication and mention of the grant of the patent: **10.09.2025**
(21) Application number: 20821608.5
(22) Date of filing: 12.06.2020
(51) Int. Cl.: B23Q 1/03, B23Q 3/02, B23Q 3/08, B23Q 3/10, B23Q 11/00

(54) **WORKPIECE SUPPORT APPARATUS AND WORKPIECE SUCTION FIXING METHOD**
WERKSTÜCKHALTEVORRICHTUNG UND WERKSTÜCKSAUGFIXIERVERFAHREN
APPAREIL PORTE-PIÈCE ET PROCÉDÉ DE FIXATION DE PIÈCE PAR ASPIRATION

(30) Priority: 13.06.2019 JP 2019110106
(43) Date of publication of application: 20.04.2022
(73) Proprietor: PASCAL ENGINEERING CORPORATION, Itami-shi Hyogo 664-8502 (JP)
(72) Inventor: KURODA, Takayuki, Itami-shi Hyogo 664-8502 (JP); HAMASHOUJI, Yoshiaki, Itami-shi Hyogo 664-8502 (JP)
(74) Representative: V.O.
(86) International application number: PCT/JP2020/023309
(87) International publication number: WO 2020/251047

(56) References cited:
- EP-A1- 1 378 318
- DE-A1- 102011 106 347
- FR-A1- 2 511 921
- JP-A- 2002 283 161
- JP-A- S58 114 832
- JP-A- S58 114 832
- JP-U- S5 485 261
- JP-U- S5 485 261
- US-A- 4 088 312
- US-A1- 2009 309 283

## Description

### TECHNICAL FIELD

The present invention relates to a workpiece suction securing method and a workpiece support apparatus which is capable of compactly performing suction locking and retention of a workpiece and which is provided with both workpiece support and suction functionalities.

### BACKGROUND ART

When carrying out machining of a sheet-like workpiece, because machining tends to cause deformation of the workpiece, it is necessary to employ workpiece support for accommodation thereof. Furthermore, because vibration during machining causes occurrence of lifting, employment of a suction clamp to hold it down will also be necessary.

For example, because that which is described at Patent Reference No. 1 (Japanese Patent Application Publication Kokai No. 2002-283161) is such that the bottom surface of the workpiece is borne on from below, it has been incapable of preventing chatter vibration.

While that which is described at Patent Reference No. 2 (Japanese Patent Application Publication Kokai No. 2008-87125) is such that a suction pad is employed for suction and retention of the bottom surface of the workpiece, elastic deformation of the suction pad which is constituted from an elastic member has made it incapable of preventing chatter vibration.

While that which is described at Patent Reference No. 3 (Japanese Patent Application Publication Kokai No. H1[1989]-109042) is such that a suction cup and a support body are provided at separate locations, the workpiece being supported in distributed fashion by support functionalities from suction and from rigid body support in an attempt to prevent vibration of the workpiece, because the functionalities are distributed, it has not been capable of adequately preventing chatter vibration.

Not only do the foregoing conventional devices have the problem of being unable to prevent chatter vibration but they have also had the following problems.

Because the suction clamp and the workpiece support are separately installed, it has been impossible for these to be made compact, and it has been impossible to cause the workpiece support to make multipoint contact.

Patent Reference No. 4 (US 4 088 312 A) discloses a variable contour securing system having a retaining structure for a member whose surface contains a variable contour. The retaining mechanism includes a spaced array of adjustable spindles mounted on a housing. Each spindle has a base member support cup at one end thereof. A vacuum source is applied to the cups for seating the member adjacent to the cups. A locking mechanism sets the spindles in a predetermined position once the member has been secured to the spindle support cups.

Where the head cap of the workpiece support is a vacuum pad (suction pad), the fact that this requires plumbing and so forth causes weight to increase and necessitates increase in the stiffness of the riser spring. This then causes a large amount of deformation of the workpiece.

Where only a suction clamp apparatus is used to carry out multipoint support, the fact that there is no seat means that it will not be possible to suppress the deformation which results from the load. Where retention is carried out by a suction clamp and a multipoint seating surface, strain and so forth occurring at the workpiece material has made multipoint bearing thereof impossible.

While a flat surface can be clamped and retained by a flat suction clamp apparatus, a flat suction clamp apparatus cannot be used with a workpiece whose two ends are curved or a workpiece in which a step is present.

### PRIOR ART REFERENCES

### PATENT REFERENCES

Patent Reference No. 1: Japanese Patent Application Publication Kokai No. 2002-283161
Patent Reference No. 2: Japanese Patent Application Publication Kokai No. 2008-87125
Patent Reference No. 3: Japanese Patent Application Publication Kokai No. H01[1989]-109042
Patent Reference No. 4: US 4 088 312 A

### SUMMARY OF INVENTION

### PROBLEM TO BE SOLVED BY INVENTION

The present invention endeavors to solve the aforementioned problems of the conventional art, it being an object thereof to provide a workpiece support apparatus such as will permit suction and rigid body support to be carried out at the same location and make it possible to achieve a more compact apparatus, and such as will make it possible to prevent chatter vibration.

### MEANS FOR SOLVING PROBLEM

To achieve the foregoing object, the present invention is carried out by a workpiece support apparatus comprising the features set forth in claim 1.

It is preferred that the support member have a rod portion which is located within the case member; and a central hole with an opening at an end opposite the protruding end is provided at a central portion of said rod portion, the compliance providing member being housed within said central hole.

It is preferred that the securing apparatus have a compressive contact member which is arranged at an outside circumferential surface of the support member in such fashion as to allow movement in the axial direction of the support member, and which by virtue of its compressive contact with the outside circumferential surface of the support member constrains movement in the axial direction of the support member; and a pressure applying portion which causes said compressive contact member to be in compressive contact with the outside circumferential surface of the support member.

It is preferred that a shutoff valve be provided at the intake passage of the protruding end, and a valve spring be provided that causes a restoring force which tends to cause movement in a direction such as will increase protrusion to act on said shutoff valve and that closes the valve; wherein, when in the secured by suction state, the shutoff valve at least partially overcomes the force from the valve spring, causing the valve to remain in an open state, and is abutted and secured by the protruding end.

It is preferred that the constitution be such as to permit adjustment of relative locations in the axial direction of a surface at a tip of the protruding end and a surface at a tip of the suction pad.

It is preferred that a surface at a tip of the protruding end be located below a surface at a tip of the suction pad.

Another aspect of the invention is a workpiece suction securing method comprising the features set forth in claim 7.

### BENEFIT OF INVENTION

Because the present invention is such that suction and securing are carried out at the same location, it is capable of being made compact and of preventing chatter vibration.

### BRIEF DESCRIPTION OF DRAWINGS

[FIG. 1] Drawing to assist in describing how a workpiece support apparatus associated with an embodiment of the present invention might be used.
[FIG. 2] Sectional view showing an embodiment of the present invention, in which an adjustment apparatus utilizes fluid pressure lift, a support member being in a free state at a lowered position.
[FIG. 3] Drawing showing how the apparatus of FIG. 2 might be used, (a) showing a state in which a support member is raised and a suction pad is made to contact a workpiece, and (b) showing a state in which securing by suction is made to occur.
[FIG. 4] Sectional view showing another embodiment of the present invention, in which an adjustment apparatus utilizes spring lift, a support member being in a free state at a raised position.
[FIG. 5] Drawing showing how the apparatus of FIG. 4 might be used, (a) showing a state in which a workpiece is lowered and a suction pad is made to contact the workpiece, and (b) showing a state in which securing by suction is made to occur.
[FIG. 6] Sectional view showing another embodiment of the present invention, in which an adjustment apparatus utilizes fluid pressure lift, and in which a shutoff valve is utilized at a negative pressure apparatus, a support member being in a free state at a lowered position.
[FIG. 7] Drawing showing how the apparatus of FIG. 6 might be used, (a) showing a state in which a support member is raised and a suction pad and a shutoff valve are made to contact a workpiece, and (b) showing a state in which securing by suction is made to occur.
[FIG. 8] Sectional view showing another embodiment of the present invention, in which an adjustment apparatus utilizes fluid pressure lift, and in which adjustment of height is made possible by threaded adjustment at a protruding end, a support member being in a free state at a lowered position.
[FIG. 9] Drawing showing how the apparatus of FIG. 8 might be used, (a) showing a state in which a support member is raised and a suction pad is made to contact a workpiece, and (b) showing a state in which securing by suction is made to occur.
[FIG. 10] Sectional view showing another embodiment of the present invention, in which an adjustment apparatus utilizes fluid pressure lift, and in which adjustment of height is made possible by threaded adjustment at a protruding end, a support member being in a free state at a lowered position.
[FIG. 11] Explanatory diagram showing how the workpiece support apparatus shown in FIG. 10 might be used.

### EMBODIMENTS FOR CARRYING OUT INVENTION

Below, embodiments of the present invention are described with reference to the drawings.

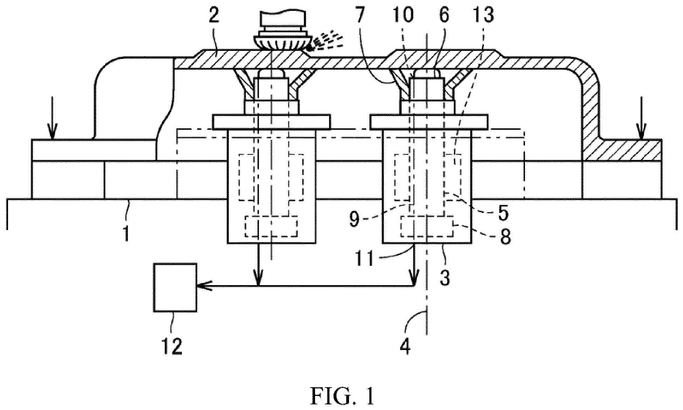

At FIG. 1, workpiece support apparatus(es) in accordance with the present embodiment are provided at workpiece support unit 1. Workpiece 2 is attached to workpiece support unit 1. The workpiece support apparatus carries out securing and suction at the same location at the bottom surface of workpiece 2 and prevents vibration that would otherwise occur during cutting or other such machining operation.

The workpiece support apparatus has case member 3. Case member 3 is provided at workpiece support unit 1. Case member 3 has axis 4.

There is no particular limitation with respect to the structure by means of which case member 3 is provided at workpiece support unit 1. For example, case member 3 might be formed as a cylindrical body, threads might be formed at the outside circumferential surface of the cylindrical body, and this might be threadedly fastened to workpiece support unit 1 by means of those threads. Alternatively, a flange might be provided at case member 3, and this flange might be secured to workpiece support unit 1 (see embodiment indicated by imaginary lines). Threaded engagement makes it possible for the attachment location to be made adjustable in the axial direction of the workpiece support apparatus.

The workpiece support apparatus has support member 5. Support member 5 is provided at case member 3 in such fashion as to be movable in the axial direction. At one end in the axial direction of support member 5, protruding end 6 protrudes outside of case member 3.

The workpiece support apparatus has suction pad 7. Suction pad 7 is provided concentrically with respect to protruding end 6 of support member 5. Suction pad 7 adheres by suction to workpiece 2, and is made up of rubber or other such elastic member(s). While there is no limitation with respect to the shape of suction pad 7, it might, for example, have a base portion which is secured to protruding end 6, and might have an aperture periphery that opens in trumpet-like fashion so as to be directed upward from the base portion, the suction surface being formed by this periphery.

The workpiece support apparatus has adjustment apparatus 8. Adjustment apparatus 8 is provided between support member 5 and case member 3 so as to permit adjustment of the pressure with which support member 5 abuts workpiece 2. This adjustment apparatus 8 prevents support member 5 from causing workpiece 2 to be pressed upward with a large force such as would cause deformation of workpiece 2.

As a specific example of an adjustment apparatus 8, this may be constituted by causing a spring of low stiffness in the form of an elastic member or the like to be present in intervening fashion between support member 5 and case member 3.

The workpiece support apparatus has intake passage 9. Intake passage 9 may be constituted so as to cause intake port 10 which is provided at protruding end 6 at the interior of suction pad 7 to communicate with suction port 11 which is provided at case member 3. A vacuum pump or other such negative pressure producing apparatus 12 is connected to suction port 11.

This intake passage 9 makes it possible for a state in which securing by suction occurs to be maintained by virtue of the fact that negative pressure produced at the interior of suction pad 7 causes the surface at the tip of protruding end 6 to abut the outer surface of workpiece 2.

The workpiece support apparatus has securing apparatus 13. Securing apparatus 13 causes support member 5 to be secured to case member 3 when in the aforementioned state in which securing by suction occurs.

Description will now be given with respect to the operation of a workpiece support apparatus which is constituted as described above.

Workpiece 2 and suction pad 7 of the workpiece support apparatus are made to mutually approach, and the suction surface at the top end of suction pad 7 is made to abut the bottom surface of workpiece 2. The pressure with which these abut is adjusted by means of adjustment apparatus 8 so that support member 5 does not cause workpiece 2 to be pressed upward with a large force such as would cause deformation of workpiece 2.

Negative pressure producing apparatus 12 causes there to be negative pressure within intake passage 9, negative pressure at the interior of suction pad 7 causing suction pad 7 to deform and causing support member 5 to be drawn toward workpiece 2, such that the surface at the tip of protruding end 6 is firmly secured by suction to the bottom surface of workpiece 2.

Securing apparatus 13 causes support member 5 to be secured to case member 3. As a result, the bottom surface of workpiece 2 is secured to case member 3, and vibration (chatter vibration) in the vertical direction of workpiece 2 which is secured to workpiece support unit 1 is prevented by just only suction pad 7.

As should be clear from the foregoing description, note that "securing by suction" in the context of the present invention refers to use of adjustment apparatus 8 to cause support member 5 to be secured to workpiece 2 in such fashion that it is lightly pressed thereagainst, which should be understood to be different from "securing by pressing" such as would cause support member 5 to be pressed thereagainst with a large amount of force. That is, whereas with "securing by suction" the lifting force that acts on the workpiece from the case member is a force which tends to cause lifting that is applied thereon by way of an adjustment apparatus, with "securing by pressing" the force which tends to cause lifting would be applied thereon directly from the case member.

A workpiece suction securing method will now be described using FIG. 1. This method is carried out using a workpiece support apparatus which is provided with suction pad 7 at protruding end 6 of support member 5 which is movably provided at case member 3. Suction pad 7 is made to abut workpiece 2, and by causing there to be negative pressure at the interior of suction pad 7, the surface at the tip of protruding end 6 is made to abut the outer surface of workpiece 2, following which support member 5 is secured to case member 3.

This method makes it possible to carry out "securing by suction" as distinct from "securing by pressing," and makes it possible to prevent vibration in a vertical direction, while preventing the workpiece support apparatus from causing deformation of the workpiece.

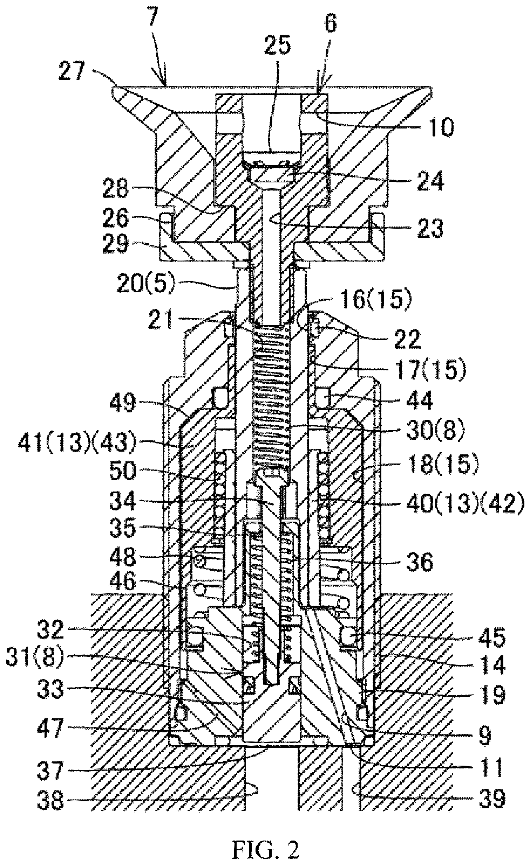

FIG. 2 shows an embodiment which illustrates a more specific constitution, being a sectional view of a workpiece support apparatus in accordance with the present embodiment, shown in a free state in which it might exist before it carries out support of workpiece 2. In the description which follows, note that components identical in constitution to those at FIG. 1 have been given identical reference numerals.

Case member 3 is formed as a cylindrical body, threads 14 being formed at the outside circumferential surface thereof. Case member 3 is threadedly fastened to workpiece support unit 1 by means of these threads 14.

Support member through-hole 15 is provided at the central portion of case member 3 in such fashion as to extend all the way therethrough in the vertical direction. The axis of this through-hole 15 is axis 4 of case member 3.

The diameter of this through-hole 15 varies from small-diameter portion 16 to medium-diameter portion 17 to large-diameter portion 18 as one proceeds from the top end thereof to the bottom end thereof. Lid 19 is threadedly engaged with the bottom end of large-diameter portion 18 so as to close off through-hole 15.

Support member 5 has rod portion 20 which is located at the interior of case member 3 where the other end thereof in the axial direction is present. Central hole 21 with opening at the other end in the axial direction is provided at the central portion of rod portion 20. Protruding end 6 is connected and secured at one end of this rod portion 20.

Rod portion 20 is slidably inserted within small-diameter portion 16 of support member through-hole 15 of case member 3. Sealing member 22 is provided at small-diameter portion 16. This sealing member 22 prevents entry of contaminants thereinto via the gap between small-diameter portion 16 and rod portion 20. It is in particular preferred that this be a scraper-type seal such as will prevent entry of contaminants thereinto when there is negative pressure within case member 3.

Protruding end 6 is joined to the end of rod portion 20 by means of threads. Through-hole 23 is formed at the central portion of protruding end 6 in such fashion as to extend all the way therethrough in the vertical direction. Filter 24 is provided at a location partway along through-hole 23. This filter 24 is removably secured to through-hole 23 by means of filter securing member 25. Intake port 10 with opening at the side face of protruding end 6 is provided at a location above this filter 24, intake port 10 and through-hole 23 being in mutual communication. Through-hole 23 is in communication with central hole 21 of rod portion 20. Intake port 10, through-hole 23, and central hole 21 form intake passage 9.

Suction pad 7 is secured to protruding end 6. Suction pad 7 has aperture periphery 27 that opens in trumpet-like fashion upwardly from base portion 26, this periphery 27 forming the suction surface. A surface at the tip of protruding end 6 is located at the central portion of the suction surface. The surface at the tip of protruding end 6 is located below the suction surface. Intake port 10 with opening at the side face of protruding end 6 is open at the interior of suction pad 7.

Base portion 26 of suction pad 7 is mated in airtight fashion to a small-diameter portion which is provided below protruding end 6, small-diameter step 28 preventing this from moving upward. The bottom end of base portion 26 of suction pad 7 is supported-and downward movement thereof is prevented-by cupped bearing member 29 which is provided at the protruding end.

Adjustment apparatus 8 has compliance providing member 30 which causes a restoring force in the direction of protrusion to be applied to support member 5, and has cylinder apparatus 31 which permits movement of compliance providing member 30 in the direction of protrusion.

Compliance providing member 30 is made up of a riser spring comprising a compression coil spring. This riser spring 30 is a spring of low stiffness. The riser spring which serves as compliance providing member 30 is housed within central hole 21 of rod portion 20.

Cylinder apparatus 31 has cylinder chamber 32 which is formed at case member 3, piston 33 which is slidably housed within cylinder chamber 32, and piston rod 34 which is provided at piston 33 and which protrudes upwardly from cylinder chamber 32.

Cylinder chamber 32 is formed at lid 19. Lid 19 has convexity 35 which protrudes upwardly therefrom. This convexity 35 is mated to the interior of central hole 21 of rod portion 20, and guides movement in the vertical direction of support member 5.

Compression spring 36 abuts the top surface of piston 33 which is housed within cylinder apparatus 31, causing a downwardly directed restoring force to be constantly applied to piston 33.

Cylinder chamber 32 below piston 33 serves as fluid pressure supply port 37 with opening therebelow. This fluid pressure supply port 37 communicates with pressurized fluid passage 38 which is formed at workpiece support unit 1. This pressurized fluid passage 38 is in communication with a pump, compressor, or other such pressure producing apparatus, not shown. The pressurized fluid may be either a liquid or a gas.

Riser spring 30 which is housed within central hole 21 of rod portion 20 is such that the bottom end thereof abuts the top end of piston rod 34, and the top end thereof abuts the bottom end of protruding end 6.

Accordingly, support member 5 is made to move upward due to the restoring force from riser spring 30 and the rising of piston 33.

Provided at lid 19 is intake passage 9, which is in communication with suction port 11, and with central hole 21 of rod portion 20 by way of suction port 11. Suction port 11 is in communication with suction passage 39 which is provided at workpiece support unit 1, this suction passage 39 being in communication with negative pressure producing apparatus 12 (see FIG. 1).

Securing apparatus 13 has compressive contact member 40 which is arranged at the outside circumferential surface of support member 5 in such fashion as to allow movement in the axial direction of support member 5. By virtue of its compressive contact with the outside circumferential surface of support member 5, compressive contact member 40 constrains movement in the axial direction of support member 5.

Securing apparatus 13 has pressure applying portion 41 which causes the compressive contact member to be in compressive contact with the outside circumferential surface of support member 5. Compressive contact from compressive contact member 40 produced by pressure applying portion 41 causes support member 5 to be secured to case member 3.

Compressive contact member 40 is fitted to the exterior of rod portion 20 and comprises a cylindrical member, the diameter of which is capable of being decreased. The cylindrical member is formed as a tapered sleeve 42. The outside circumferential surface of tapered sleeve 42 is formed as a tapered surface which increases in diameter as one proceeds toward the bottom thereof. The bottom end of tapered sleeve 42 abuts the top surface of lid 19, preventing downward movement thereof.

Pressure applying portion 41 is fitted to the exterior of tapered sleeve 42 to form tapered piston 43 which is movable in the axial direction. Tapered piston 43 is fitted to the interior of through-hole 15 of case member 3 along a region thereof corresponding to medium-diameter portion 17 and large-diameter portion 18. Sealing material 44 is provided at medium-diameter portion 17 such that airtightness thereof is maintained. The bottom end of tapered piston 43 is fitted to the exterior of lid 19. Sealing material 45 is provided at lid 19 such that airtightness of tapered piston 43 and lid 19 is maintained.

Gap 46 is formed between the inner surface of large-diameter portion 18 and tapered piston 43. Pressure applying passage 47 which communicates with this gap 46 is formed at lid 19. This pressure applying passage 47 communicates with the bottom end of cylinder chamber 32.

An upward restoring force from compression spring 48 which abuts the top surface of lid 19 acts on tapered piston 43. The shoulder of tapered piston 43 which is located at the step at the boundary between medium-diameter portion 17 and large-diameter portion 18 serves as pressure applying surface 49. A pressure applying medium which is supplied thereto from gap 46 causes pressure applying surface 49 to be pressed downward, causing tapered piston 43 to at least partially overcome the force from compression spring 48 and move downward.

The inner surface of tapered piston 43 is formed as a tapered surface having the same taper angle as tapered sleeve 42. A multiplicity of steel spheres 50 are present in intervening fashion between the tapered surface of this tapered piston 43 and the tapered surface of tapered sleeve 42.

Descent of tapered piston 43 causes tapered sleeve 42 to be tightened thereagainst by way of steel spheres 50, decreasing the diameter thereof and causing rod portion 20 to be locked to case member 3.

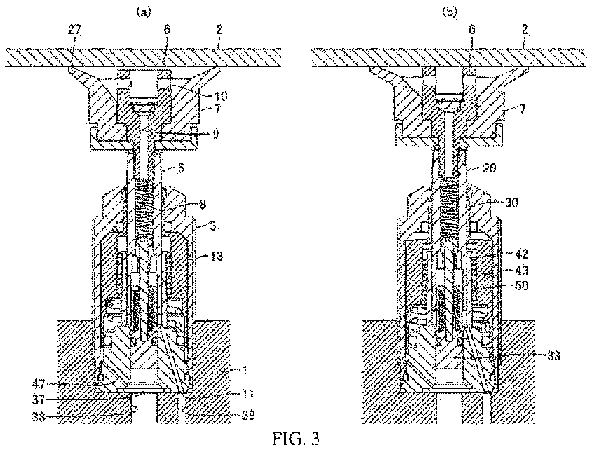

(a) at FIG. 3 shows a state in which, at the apparatus of FIG. 2, piston 33 is raised and aperture periphery 27 at the tip of suction pad 7 is made to come in contact with the bottom surface of workpiece 2; (b) at same shows a state in which securing and suction of workpiece 2 by support member 5 and suction pad 7 is made to occur at the same location.

At (a) in FIG. 3, workpiece 2 is secured to workpiece support unit 1. Pressure applying medium is supplied to fluid pressure supply port 37, piston 33 is made to rise, support member 5 is made to rise by way of riser spring 30, and aperture periphery 27 of suction pad 7 is made to abut the bottom surface of workpiece 2. While in this abutting state, the surface at the tip of protruding end 6 does not abut the bottom surface of workpiece 2.

Although piston 33 rises further, riser spring 30 contracts and support member 5 does not rise by a corresponding amount. That is, as the riser spring which serves as compliance providing member 30 is of extremely low stiffness, this prevents the workpiece from being pressed upward and deformed.

While in this state, pressure applying medium supplied to fluid pressure supply port 37 passes through pressure applying passage 47 and gap 46 and also acts on pressure applying surface 49 at the shoulder of tapered piston 43, but due to the restoring force from compression spring 48 and so forth, tapered piston 43 does not yet move downward.

While in this state, the interior of suction pad 7 is made to have negative pressure. That is, the interior of suction pad 7 is made to have negative pressure by means of negative pressure producing apparatus 12 (see FIG. 1). The negative pressure produced by negative pressure producing apparatus 12 causes suction passage 39 of workpiece support unit 1, suction port 11 of case member 3, intake passage 9 formed at lid 19, central hole 21 of support member 5, through-hole 23 of protruding end 6, and intake port 10 to have negative pressure, and the interior of suction pad 7 is made to have negative pressure.

At (b) in FIG. 3, the fact that the interior of suction pad 7 is made to have negative pressure causes suction pad 7 to undergo elastic deformation, lifting up support member 5, and the surface at the tip of protruding end 6 is "secured by suction" to the bottom surface of workpiece 2. Unlike the "securing by pressing" that takes place while in the state at (a) when support member 5 is raised and the bottom surface of workpiece 2 is pressed on and is made to abut the surface at the tip of protruding end 6, because with this securing by suction there is no generation of a force such as would press upward on workpiece 2, there is no possibility of occurrence of deformation of workpiece 2. That is, "securing by pressing" and "securing by suction" are different.

When the securing by suction of suction pad 7 causes the surface at the tip of protruding end 6 to be secured by suction to the bottom surface of workpiece 2, pressure of the pressure applying medium which acts on tapered piston 43 increases, and tapered piston 43 at least partially overcomes the force from compression spring 48 and moves downward. The downward movement of this tapered piston 43 causes tapered sleeve 42 to decrease in diameter by way of steel spheres 50 and causes rod portion 20 to tighten, causing support member 5 to be secured to case member 3.

Workpiece support apparatus thus causes workpiece 2 to be secured by suction, preventing vertical vibration thereof.

Note that negative pressure producing apparatus 12 may have been put into operation from a time prior to when the state at (a) in FIG. 3 is reached. **In** such case, because filter 24 is provided within intake passage 9, suction of contaminants thereinto is inhibited.

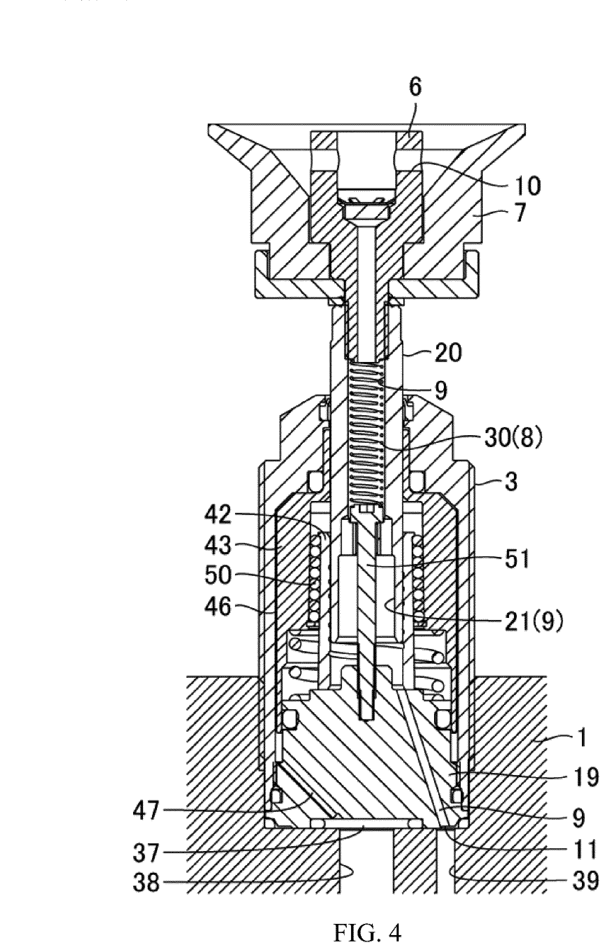

FIG. 4 shows another embodiment of the present invention, in which adjustment apparatus 8 does not have a cylinder apparatus but is made up solely of compliance providing member 30.

At this embodiment, a cylinder apparatus is not provided at lid 19. Riser spring support body 51 is provided in upright fashion at lid 19. The bottom end of the riser spring which serves as compliance providing member 30 of adjustment apparatus 8 is supported by this riser spring support body 51.

Formed at lid 19 is pressure applying passage 47 which communicates with gap 46 formed between the inner surface of large-diameter portion 18 and tapered piston 43 of securing apparatus 13. Fluid pressure supply port 37 which is in communication with pressure applying passage 47 is provided at the bottom surface of lid 19.

The constitution is in other respects identical to that shown at the aforementioned FIG. 2.

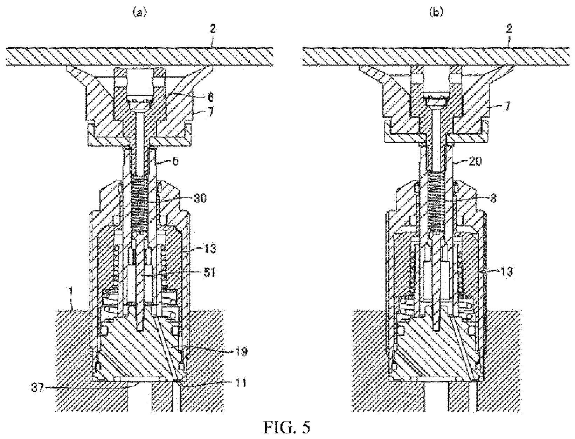

(a) at FIG. 5 shows a state in which, at the apparatus of FIG. 4, workpiece 2 is lowered and the suction surface at the tip of suction pad 7 is made to come in contact with the bottom surface of workpiece 2; (b) at same shows a state in which securing and suction of the workpiece by support member 5 and suction pad 7 is made to occur at the same location.

At (a), when workpiece 2 is lowered and secured to workpiece support unit 1, the bottom surface of workpiece 2 abuts aperture periphery 27 of suction pad 7. At this time, the riser spring which serves as compliance providing member 30 of adjustment apparatus 8 is compressed, support member 5 being lowered in accompaniment to lowering of workpiece 2 until the pressure of abutment reaches a prescribed pressure. The stiffness of riser spring 30 is chosen so as not to cause deformation of the workpiece at the pressure of abutment.

As shown at (b), the interior of suction pad 7 is made to have negative pressure, the surface at the tip of protruding end 6 is drawn toward and is made to abut the bottom surface of workpiece 2, being secured by suction to workpiece 2.

Operation of securing apparatus 13 causes support member 5 to be secured to case member 3. As a result, the bottom surface of workpiece 2 is secured by suction by means of suction pad 7 and support member 5, being secured to case member 3 by way of securing apparatus 13.

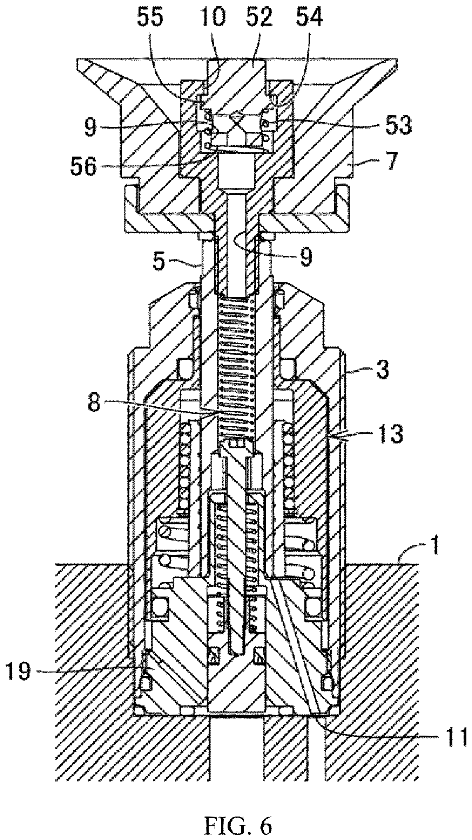

FIG. 6 shows another embodiment of the present invention, in which intake port 10 is provided at the surface at the tip of protruding end 6. This intake port 10 is provided with shutoff valve 52 which is capable of being opened and closed. Valve spring 53 causes a restoring force that tends to cause movement in a direction such as will increase protrusion to act on shutoff valve 52 so as to cause it to protrude toward the exterior from intake port 10 and close the valve.

Valve seat 54 is formed at the bottom surface of intake port 10. Shutoff valve 52 has flange 55 which makes intimate contact with this valve seat 54. Valve spring 53 causes flange 55 to come in intimate contact with valve seat 54, closing intake passage 9.

When shutoff valve 52 at least partially overcomes the force from this valve spring 53 and moves downward to open valve seat 54, the bottom end surface 56 of shutoff valve 52 abuts protruding end 6 and blocks intake passage 9. Shutoff valve 52 is therefore provided with intake passage 9 which causes intake port 10 and intake passage 9 to be in mutual communication when in a state in which bottom end surface 56 closes intake passage 9.

The constitution is in other respects identical to that shown at FIG. 2.

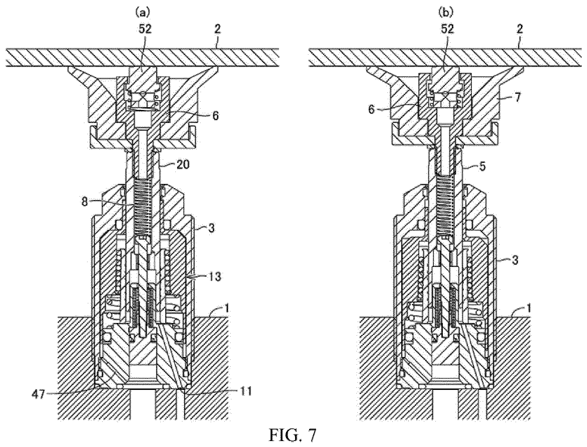

(a) at FIG. 7 shows a state in which, at the apparatus of FIG. 6, support member 5 is raised and the suction surface at the tip of suction pad 7 is made to come in contact with the bottom surface of workpiece 2; (b) at same shows a state in which securing and suction of workpiece 2 by support member 5 and suction pad 7 is made to occur at the same location.

At (a), when the interior of intake passage 9 is made to have negative pressure while in a state in which suction surface at the tip of suction pad 7 is in contact with the bottom surface of workpiece 2, shutoff valve 52 at least partially overcomes the force from valve spring 53 and moves downward, opening the valve and causing there to be negative pressure at the interior of suction pad 7.

As shown at (b), support member 5 is lifted up, the surface at the tip of shutoff valve 52 is made to abut workpiece 2, and bottom end surface 56 is made to abut protruding end 6. While in this state, securing apparatus 13 causes support member 5 to be secured to case member 3.

Note that shutoff valve 52 may also be such that it opens when pressed on by workpiece 2.

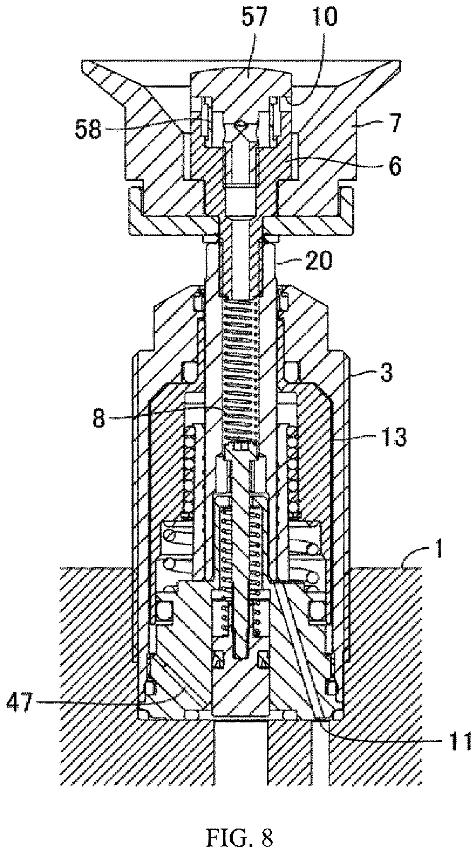

FIG. 8 shows another embodiment of the present invention, the constitution of which is such as to permit adjustment of the relative locations in the axial direction of the surface at the tip of protruding end 6 and aperture periphery 27 of suction pad 7.

That is, the surface at the tip of protruding end 6 is constituted such that tip portion 57 allows the location thereof in the axial direction to be adjusted by means of threaded engagement. Intake passage 9 is formed at the junction between protruding end 6 and tip portion 57. Cylindrical filter 58 is provided at this intake passage 9, cylindrical filter 58 being secured thereto by tip portion 57.

The surface at the tip of tip portion 57 is formed so as to be of arcuate or curved shape.

The constitution is in other respects identical to that shown at FIG. 2.

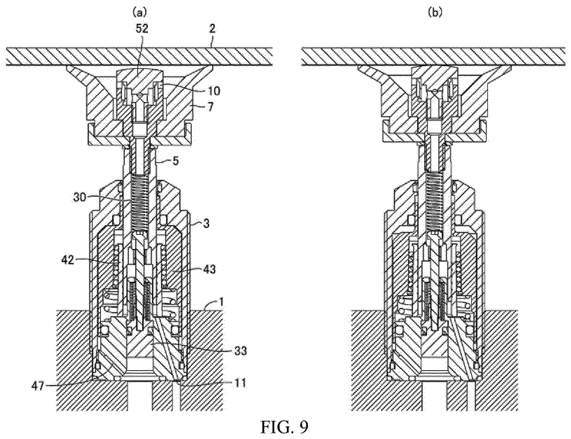

(a) at FIG. 9 shows a state in which, at the apparatus of FIG. 8, support member 5 is raised and the suction surface at the tip of suction pad 7 is made to come in contact with the bottom surface of workpiece 2; (b) at same shows a state in which securing and suction of the workpiece by support member 5 and suction pad 7 is made to occur at the same location.

At this embodiment, because the relative locations in the axial direction of the surface at the tip of tip portion 57 and aperture periphery 27 of suction pad 7 are adjustable, it is possible to easily carry out adjustment even when workpiece 2 changes.

Because the surface at the tip of tip portion 57 is formed so as to be of arcuate or curved shape, it is possible to cause even curved surfaces and inclined surfaces of workpiece 2 to be secured by suction.

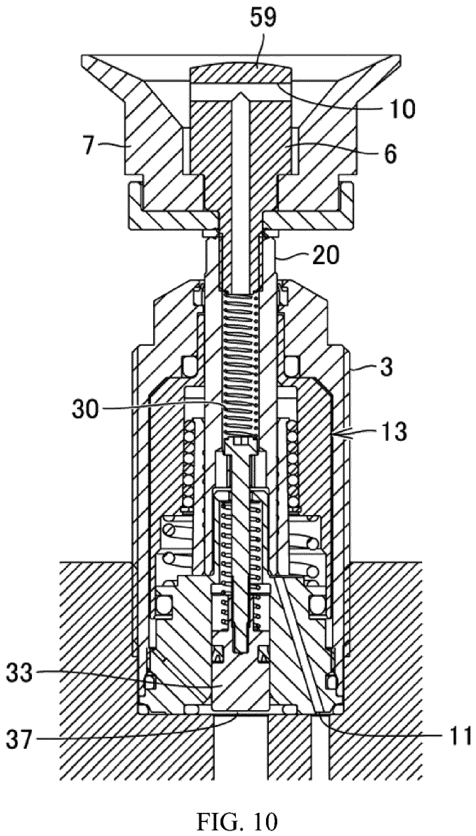

FIG. 10 shows another embodiment of the present invention, in which the surface at the tip of protruding end 6 which abuts workpiece 2 is formed as a curved surface 59.

The surface at the tip of protruding end 6 is a radiused surface, intake port 10 of protruding end 6 has opening at the side face thereof, and no filter is provided at intake passage 9.

The constitution is in other respects identical to that shown at FIG. 2.

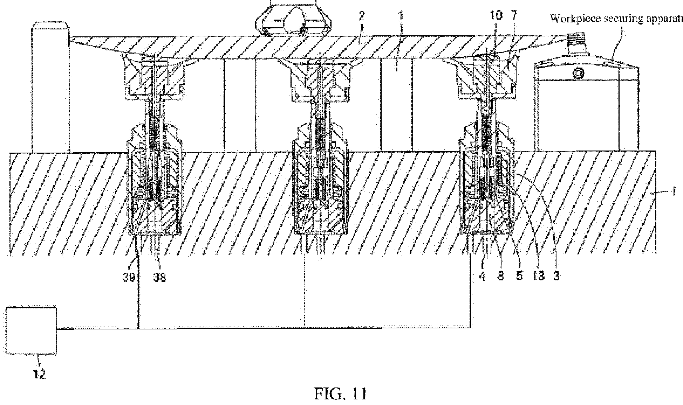

FIG. 11 is an diagram to assist in describing a way of using the workpiece support apparatus shown in FIG. 10.

Even where the periphery of workpiece 2 is not a flat surface but is a curved surface or an inclined surface, the fact that the surface at the tip of protruding end 6 is a curved surface 59 will make it possible for this to be secured by suction.

In such case, note that if the constitution is made such that the relative locations in the axial direction of the surface at the tip of protruding end 6 and aperture periphery 27 of suction pad 7 are adjustable as shown in FIG. 8, this will make it possible to increase the range of possible ways in which it may be used.

It should be understood that the embodiments that have been disclosed herein are exemplary in all respects and should not be interpreted as limiting. For example, support member 5 is not limited to constitutions in which rod portion 20 and protruding end 6 are separate members, it being possible for these to take the form of an integral part. Securing apparatus 13 is not limited to those which are of the tapered sleeve type, it being possible for this to be of elastically deformable sleeve type such as is disclosed at Japanese Patent Application Publication Kokai No. 2002-283161. Compliance providing member 30 is not limited to being an elastic member such as a spring, it being possible for this to be a member such as a dashpot cylinder, which is to say that it is sufficient so long as it is capable of causing suction pad 7 to be abutted with the prescribed pressure of abutment. The shape of suction pad 7 is not limited to being such that it opens upwardly in trumpet-like fashion, it being possible for this to be bellows-like in shape.

The scope of the present invention is not as described above but is as indicated by the claims, and includes all variations within the scope of or equivalent in meaning to that which is recited in the claims.

### EXPLANATION OF REFERENCE NUMERALS

- 1: Workpiece support unit
- 2: Workpiece
- 3: Case member
- 4: Axis
- 5: Support member
- 6: Protruding end
- 7: Suction pad
- 8: Adjustment apparatus
- 9: Intake passage
- 10: Intake port
- 11: Suction port
- 12: Negative pressure producing apparatus
- 13: Securing apparatus
- 14: Threads
- 15: Support member through-hole
- 16: Small-diameter portion
- 17: Medium-diameter portion
- 18: Large-diameter portion
- 19: Lid
- 20: Rod portion
- 21: Central hole
- 22: Sealing member
- 23: Through-hole
- 24: Filter
- 25: Filter securing member
- 26: Base portion
- 27: Aperture periphery
- 28: Small-diameter step
- 29: Cupped bearing member
- 30: Compliance providing member (riser spring)
- 31: Cylinder apparatus
- 32: Cylinder chamber
- 33: Piston
- 34: Piston rod
- 35: Convexity
- 36: Compression spring
- 37: Fluid pressure supply port
- 38: Pressurized fluid passage
- 39: Suction passage
- 40: Compressive contact member
- 41: Pressure applying member
- 42: Tapered sleeve
- 43: Tapered piston
- 44: Sealing member
- 45: Sealing member
- 46: Gap
- 47: Pressure applying passage
- 48: Compression spring
- 49: Pressure applying surface
- 50: Steel sphere
- 51: Riser spring support body
- 52: Shutoff valve
- 53: Valve spring
- 54: Valve seat
- 55: Flange
- 56: Bottom end surface
- 57: Tip portion
- 58: Cylindrical filter
- 59: Curved surface

## Claims

1. A workpiece support apparatus having:
a case member (3) which has an axis and which is provided at a workpiece support unit (1) that supports a workpiece (2);
a support member (5), one end of which protrudes outside of the case member and constitutes a protruding end that supports the workpiece, and which is provided at said case member in such fashion as to be movable in the axial direction;
a suction pad (7) which is provided concentrically with respect to the protruding end and which adheres by suction to the workpiece;
a securing apparatus (13);
an adjustment apparatus (8) which is provided between the support member and the case member so as to permit adjustment of a pressure with which the support member abuts the workpiece;
wherein said adjustment apparatus has a compliance providing member (30) that causes a restoring force in a direction of protrusion to be applied to the support member;
wherein said adjustment apparatus has a cylinder apparatus (31) that causes the compliance providing member to move in the direction of protrusion;
a pressurized fluid passage (38) that is connected to the cylinder apparatus and the securing apparatus, and a suction passage (39) that is connected to a suction port (11);
a pressure producing apparatus is connected to said pressurized fluid passage (38);
a negative pressure producing apparatus (12) is connected to said suction passage;
an intake passage (9) which causes there to be negative pressure within the suction pad by the negative pressure producing apparatus at a time when the suction pad (7) moved by the cylinder apparatus abuts a bottom surface of the workpiece, and which causes there to be mutual communication between the suction port (11) provided at the case member and an intake port (10) provided so as to permit the protruding end to be secured by suction to the workpiece; and
the securing apparatus (13) which, when in the secured by suction state, secures the support member by suction to the case member (3).

2. The workpiece support apparatus according to claim 1 wherein the support member (5) has a rod portion which is located within the case member; and
a central hole (21) with an opening at an end opposite the protruding end is provided at a central portion of said rod portion, the compliance providing member (30) being housed within said central hole.

3. The workpiece support apparatus according to any one of claims 1 or 2 wherein the securing apparatus has
a compressive contact member (40) which is arranged at an outside circumferential surface of the support member in such fashion as to allow movement in the axial direction of the support member, and which by virtue of its compressive contact with the outside circumferential surface of the support member constrains movement in the axial direction of the support member; and
a pressure applying portion (41) which causes said compressive contact member to be in compressive contact with the outside circumferential surface of the support member.

4. The workpiece support apparatus according to any one of claims 1 through 3 wherein a shutoff valve (51) is provided at the intake passage of the protruding end, and a valve spring (53) is provided that causes a restoring force which tends to cause movement in a direction such as will increase protrusion to act on said shutoff valve and that closes the valve;
wherein, when in the secured by suction state, the shutoff valve at least partially overcomes the force from the valve spring, causing the valve to remain in an open state, and is abutted and secured by the protruding end.

5. The workpiece support apparatus according to any one of claims 1 through 4 constituted so as to permit adjustment of relative locations in the axial direction of a surface at a tip of the protruding end and a surface at a tip of the suction pad (7).

6. The workpiece support apparatus according to any one of claims 1 through 5 wherein a surface at a tip of the protruding end is located below a surface at a tip of the suction pad (7).

7. A workpiece suction securing method that employs a workpiece support apparatus at which a suction pad (7) is provided at a protruding end of a support member (5) which is movably provided at a case member (3) which is provided on a workpiece support unit (1); wherein the suction pad is made to abut a bottom surface of a workpiece (2) which is secured to the workpiece support unit (1); and wherein, when an interior of the suction pad is made to have negative pressure, a surface at a tip of the protruding end is made to abut and secure the bottom surface of the workpiece by suction; following which the support member is secured to the case member.

## Patentansprüche

1. Werkstück-Auflagevorrichtung, aufweisend:
ein Gehäuseelement (3), das eine Achse hat und das an einer Werkstück-Auflageeinheit (1) vorgesehen ist, die ein Werkstück (2) trägt;
ein Auflageelement (5), dessen eines Ende außerhalb des Gehäuseelements vorsteht und ein vorstehendes Ende ausbildet, das das Werkstück trägt, und das an dem Gehäuseelement in einer solchen Weise vorgesehen ist, dass es in der axialen Richtung beweglich ist;
einen Saugnapf (7), der bezüglich des vorstehenden Endes konzentrisch angeordnet ist und der über eine Saugwirkung an dem Werkstück anhaftet;
eine Befestigungsvorrichtung (13);
eine Einstellvorrichtung (8), die zwischen dem Auflageelement und dem Gehäuseelement vorgesehen ist, um so eine Einstellung eines Drucks zu ermöglichen, mit dem das Auflageelement an dem Werkstück anliegt;
wobei die Einstellvorrichtung ein Federelastizitäts-Bereitstellungs-Element (30) hat, das verursacht, dass eine Rückstellkraft in einer Richtung des Vorstehens an das Auflageelement angelegt wird;
wobei die Einstellvorrichtung eine Zylindervorrichtung (31) hat, die verursacht, dass das Federelastizitäts-Bereitstellungs-Element sich in der Richtung des Vorstehens bewegt;
einen Durchgang (38) für unter Druck gesetzte Flüssigkeit, der mit der Zylindervorrichtung und der Befestigungsvorrichtung verbunden ist, und einen Saugdurchgang (39), der mit einem Sauganschluss (11) verbunden ist;
eine Druckerzeugungsvorrichtung mit dem Durchgang (38) für unter Druck gesetzte Flüssigkeit verbunden ist;
eine Negativdruckerzeugungsvorrichtung (12) mit dem Saugdurchgang verbunden ist;
einen Einlassdurchgang (9), der verursacht, dass ein negativer Druck im Saugnapf durch die Negativdruckerzeugungsvorrichtung zu einer Zeit vorhanden ist, zu der der von der Zylindervorrichtung bewegte Saugnapf (7) an eine Bodenfläche des Werkstücks anliegt, und der verursacht, dass eine wechselseitige Kommunikation zwischen dem Sauganschluss (11), der an dem Gehäuseelement vorgesehen ist, und einem Einlassanschluss (10) vorhanden ist, der so vorgesehen ist, dass ermöglicht wird, dass das vorstehende Ende durch eine Saugwirkung an dem Werkstück befestigt wird; und
die Befestigungsvorrichtung (13), die, wenn sie in dem Zustand ist, in dem sie durch Saugwirkung befestigt ist, das Auflageelement durch Saugwirkung an dem Gehäuseelement (3) befestigt.

2. Werkstück-Auflagevorrichtung gemäß Anspruch 1, wobei das Auflageelement (5) einen Stangenteil hat, der in dem Gehäuseelement angeordnet ist; und
ein Mittelloch (21) mit einer Öffnung an einem Ende gegenüber dem vorstehenden Ende an einem mittigen Teil des Stangenteils vorgesehen ist, wobei das Federelastizitäts-Bereitstellungs-Element (30) in dem Mittelloch untergebracht ist.

3. Werkstück-Auflagevorrichtung gemäß einem der Ansprüche 1 oder 2, wobei die Befestigungsvorrichtung aufweist:
ein Druckkontaktelement (40), das an einer Außenmantelfläche des Auflageelements in einer solchen Weise angeordnet ist, dass es eine Bewegung des Auflageelements in der axialen Richtung erlaubt, und das dank seines Druckkontakts mit der Außenmantelfläche des Auflageelements eine Bewegung des Auflageelements in der axialen Richtung einschränkt; und
einen Druckanlegeteil (41), der verursacht, dass das Druckkontaktelement mit der Außenmantelfläche des Auflageelements in Druckkontakt ist.

4. Werkstück-Auflagevorrichtung gemäß einem der Ansprüche 1 bis 3, wobei ein Absperrventil (51) an dem Einlassdurchgang des vorstehenden Endes vorgesehen ist, und eine Ventilfeder (53) vorgesehen ist, die verursacht, dass eine Rückstellkraft, die die Tendenz hat, eine Bewegung in einer Richtung zu verursachen, die ein Vorstehen vergrößert, auf das Absperrventil wirkt, und die das Ventil schließt;
wobei das Absperrventil, wenn es in dem Saugkraftbefestigungs-Zustand ist, mindestens teilweise die von der Ventilfeder ausgeübte Kraft überwindet, was verursacht, dass das Ventil in einem offenen Zustand verbleibt, und an das vorstehende Ende anliegt und von diesem befestigt wird.

5. Werkstück-Auflagevorrichtung gemäß einem der Ansprüche 1 bis 4, die so aufgebaut ist, dass sie eine Anpassung relativer Anordnungen einer Oberfläche an einer Spitze des vorstehenden Endes und einer Oberfläche an einer Spitze des Saugnapfs (7) in der axialen Richtung gestattet.

6. Werkstück-Auflagevorrichtung gemäß einem der Ansprüche 1 bis 5, wobei eine Oberfläche an einer Spitze des vorstehenden Endes unterhalb einer Oberfläche an einer Spitze des Saugnapfs (7) angeordnet ist.

7. Werkstück-Saugwirkungs-Befestigungs-Verfahren, das eine Werkstück-Auflagevorrichtung verwendet, an der ein Saugnapf (7) an einem vorstehenden Ende eines Auflageelements (5) vorgesehen ist, das an einem Gehäuseelement (3) beweglich vorgesehen ist, das auf einer Werkstück-Auflageeinheit (1) vorgesehen ist; wobei der Saugnapf dazu gebracht wird, an eine untere Oberfläche eines Werkstücks (2) anzuliegen, das an der Werkstück-Auflageeinheit (1) befestigt ist; und
wobei, wenn ein Inneres des Saugnapfs dazu gebracht wird, einen negativen Druck zu haben, eine Oberfläche an einer Spitze des vorstehenden Endes dazu gebracht wird, über eine Saugwirkung an die Bodenfläche des Werkstücks anzuliegen und diese zu befestigen; wonach das Auflageelement an dem Gehäuseelement befestigt wird.

## Revendications

1. Appareil porte-pièce à usiner, présentant :
un élément boîtier (3) qui présente un axe et qui est prévu au niveau d'une unité porte-pièce à usiner (1) qui supporte une pièce à usiner (2) ;
un élément support (5), dont une extrémité fait saillie à l'extérieur de l'élément boîtier et constitue une extrémité faisant saillie qui supporte la pièce à travailler, et qui est prévu au niveau dudit élément boîtier de manière à être mobile dans la direction axiale ;
une ventouse (7) qui est prévu concentriquement par rapport à l'extrémité faisant saillie et qui adhère par aspiration à la pièce à travailler ;
un appareil de fixation (13) ;
un appareil d'ajustement (8) qui est prévu entre l'élément support et l'élément boîtier de manière à permettre un ajustement d'une pression avec laquelle l'élément support vient en butée contre la pièce à travailler ;
dans lequel ledit appareil d'ajustement présente un élément de fourniture de souplesse (30) qui provoque l'application sur l'élément support d'une force de rappel dans une direction de saillie ;
dans lequel ledit appareil d'ajustement présente un appareil à cylindre (31) qui amène l'élément de fourniture de souplesse à se déplacer dans la direction de saillie ;
un passage de fluide sous pression (38) qui est relié à l'appareil à cylindre et à l'appareil de fixation, et un passage d'aspiration (39) qui est relié à un orifice d'aspiration (11) ;
un appareil de production de pression est relié audit passage de fluide sous pression (38) ;
un appareil de production de pression négative (12) est relié audit passage d'aspiration ;
un passage d'admission (9) qui provoque une pression négative à l'intérieur de la ventouse par l'appareil de production de pression négative à un moment où la ventouse (7) déplacée par l'appareil à cylindre vient en butée contre une surface inférieure de la pièce à usiner, et qui provoque une communication mutuelle entre l'orifice d'aspiration (11) prévu au niveau de l'élément boîtier et un orifice d'admission (10) prévu de manière à permettre à l'extrémité faisant saillie d'être fixée par aspiration à la pièce à usiner ; et
l'appareil de fixation (13) qui, lorsqu'il est dans l'état fixé par aspiration, fixe l'élément support par aspiration à l'élément boîtier (3).

2. Appareil porte-pièce à usiner selon la revendication 1, dans lequel l'élément support (5) présente une partie de tige qui est située à l'intérieur de l'élément boîtier ; et
un trou central (21) avec une ouverture à une extrémité opposée à l'extrémité faisant saillie est prévu au niveau d'une partie centrale de ladite partie de tige, l'élément de fourniture de souplesse (30) étant logé à l'intérieur dudit trou central.

3. Appareil porte-pièce à usiner selon l'une quelconque des revendications 1 ou 2, dans lequel l'appareil de fixation présente
un élément de contact de compression (40) qui est agencé au niveau d'une surface circonférentielle extérieure de l'élément support de manière à permettre un déplacement dans la direction axiale de l'élément support et qui, en raison de son contact de compression avec la surface circonférentielle extérieure de l'élément support, limite un déplacement dans la direction axiale de l'élément support ; et
une partie d'application de pression (41) qui amène ledit élément de contact de compression à être en contact de compression avec la surface circonférentielle extérieure de l'élément support.

4. Appareil porte-pièce à usiner selon l'une quelconque des revendications 1 à 3, dans lequel une soupape d'arrêt (51) est prévue au niveau du passage d'admission de l'extrémité faisant saillie, et un ressort de soupape (53) est prévu, qui provoque une force de rappel qui tend à provoquer un déplacement dans une direction telle qu'elle augmentera la saillie pour agir sur ladite soupape d'arrêt et qui ferme la soupape ;
dans lequel, dans l'état fixé par aspiration, le clapet d'arrêt surmonte au moins partiellement la force provenant du ressort de soupape, amenant la soupape à rester dans un état ouvert, et est en buté et fixé par l'extrémité faisant saillie.

5. Appareil porte-pièce à usiner selon l'une quelconque des revendications 1 à 4, constitué de manière à permettre un ajustement d'emplacements relatifs dans la direction axiale d'une surface au niveau d'une pointe de l'extrémité faisant saillie et d'une surface au niveau d'une pointe de la ventouse (7).

6. Appareil porte-pièce à usiner selon l'une quelconque des revendications 1 à 5, dans lequel une surface au niveau d'une pointe de l'extrémité faisant saillie est située en dessous d'une surface au niveau d'une pointe de la ventouse (7).

7. Procédé de fixation par aspiration de pièce à usiner qui utilise un appareil porte-pièce à usiner au niveau duquel une ventouse (7) est prévue à une extrémité faisant saillie d'un élément support (5) qui est prévu de manière mobile au niveau d'un élément boîtier (3) qui est prévu sur une unité porte-pièce à usiner (1) ; dans lequel la ventouse est amenée à venir en butée contre une surface inférieure d'une pièce à usiner (2) qui est fixée à l'unité porte-pièce à usiner (1) ; et
dans lequel lorsqu'un intérieur de la ventouse est amené à avoir une pression négative, une surface au niveau d'une pointe de l'extrémité faisant saillie est réalisée pour venir en butée et fixer la surface inférieure de la pièce à usiner par aspiration ; après quoi l'élément support est fixé à l'élément boîtier.
